(19) Europäisches Patentamt
European Patent Office
Office européen des brevets

(11) Publication number: **0 473 235 A1**

(12) **EUROPEAN PATENT APPLICATION**

(21) Application number: **91202174.8**

(22) Date of filing: **27.08.91**

(51) Int. Cl.5: **C08F 8/42**, C08K 5/54, C09D 5/02

(30) Priority: **30.08.90 US 575250**

(43) Date of publication of application: **04.03.92 Bulletin 92/10**

(84) Designated Contracting States: **BE DE ES FR GB IT NL**

(71) Applicant: **AKZO N.V.**
**Velperweg 76**
**NL-6824 BM Arnhem(NL)**

(72) Inventor: **Ryntz, Rose Ann**
**36056 Farmbrook**
**Mt. Clemens, Michigan 48004(US)**
Inventor: **Snowden, John Swan**
**18627 Concord**
**Detroit, Michigan 48232(US)**
Inventor: **Steehler, William Henry**
**1518 West Webster Road**
**Royal Oak, Michigan 48073(US)**

(74) Representative: **Schalkwijk, Pieter Cornelis et al**
**Akzo Patents Department P.O. Box 93 00**
**Velperweg 76**
**NL-6800 SB Arnhem(NL)**

(54) **Organosilane modified aqueous emulsions of film-forming vinyl polymers and heat resistant protective coatings therefrom.**

(57) Organosilane modified aqueous emulsions of film-forming polymers are provided which are particularly suitable for use in formulating heat resistant protective coatings for metal substrates subject to temperatures in excess of 150 °C, for example, engines, manifold pipes, mufflers and brake linings. The organosilane modified aqueous emulsions are produced by the addition of a particular reactive organosilane additive to an emulsion of an air-drying film-forming polymer.

EP 0 473 235 A1

## Background of the Invention

The present invention relates generally to aqueous emulsions of film-forming vinyl polymers which are suitable for use in formulating heat resistant protective coatings for metal substrates and, in particular, automobile engines.

More specifically, the present invention relates to the modification of such aqueous emulsions through the addition of a particular reactive organosilane thereto, which modification results in the improvement of certain protective properties such as humidity and corrosion resistance without detrimentally affecting the heat resistance and other important properties.

Heat resistant protective coatings and, in particular, engine enamels should provide sufficient heat resistance as well as corrosion protection. It is highly desirable for such coatings to provide this protection to all of the various substrates commonly used in manufacture of engines, such as phosphated cold rolled steel, aluminum, cold rolled steel, cast iron and electrocoated cold rolled steel.

Prior art engine protective coatings have generally been based on epoxyester and/or modified acrylic emulsions. Most often in these systems, however, one sacrifices corrosion protection for heat resistance.

Corrosion protection in such systems can be attained by the addition of heavy metal compounds including chromium or lead. Environmental and safety constraints, however, have limited the use of these heavy metals.

Additionally, such prior art systems have generally been organic solvent based. Again, environmental and safety constraints make the use of organic solvent based systems less fashionable.

## Summary of the Invention

In accordance with the present invention, there is provided an organosilane modified aqueous emulsion of a vinyl polymer comprising:

(A) an aqueous emulsion of an air-drying, film-forming vinyl polymer, to which has been added

(B) from about 2 to about 25 wt%, based upon the vinyl polymer solids, of one or more reactive organosilane additives of the general formula (I)

$$R^4 - R^3 - Si \begin{matrix} / R^1_n \\ \backslash R^2_{3-n} \end{matrix} \qquad (I)$$

wherein

- $R^1$ is selected from an alkoxy or aryloxy group having 1-6 carbon atoms,
- $R^2$ is selected from a monovalent hydrocarbon radical having 1-6 carbon atoms,
- n is 1, 2 or 3,
- $R^3$ is a divalent hydrocarbon radical having 1-6 carbon atoms, and
- $R^4$ is a reactive group including functionality selected from an ethylenically unsaturated group, a halogen atom, a cyano group, a mercapto group, an amino group or a glycidyl group,

the organosilane modified aqueous emulsion possessing an alkaline pH.

In addition, there is provided a heat resistant, protective aqueous coating composition based upon this organosilane modified aqueous emulsion, as well as a method of protecting a metal substrate which is subject to temperatures in excess of 150°C, which method comprises the steps of applying onto the substrate such heat resistant, protective aqueous coating composition then drying the so-applied coating.

As just indicated, the organosilane modified aqueous emulsions in accordance with the present invention find particular use in the formulation of heat resistant protective coating compositions for application onto metal substrates which are subject to temperatures in excess of 150°C and, in particular, automobile engines, manifold pipes, mufflers and brake linings.

When so utilized, the protective coating compositions based upon these organosilanes modified aqueous emulsions display a desirable combination of adhesion, humidity resistance, corrosion resistance, solvent resistance as well as heat resistance, making them particularly suited for the above-mentioned uses.

Additionally, the protective coating compositions in accordance with the present invention are waterborne and, consequently, much more environmentally friendly than other organic solvent based counterparts.

It should be noted that aqueous systems comprising silane/silicone modified copolymers are in a general sense known. See, for example, EP-A-0043127, EP-A-0292155, US3814716, US4291095, US4617057, US4650889, US4803233, JP-A-60221450 and BE867898. The use of silane/silicone modified systems in formulating heat resistant protective coatings and, in particular, aqueous heat resistant protective coatings is not known.

These and other features and advantages of the present invention will be more readily understood by one skilled in the art from a reading of the following detailed description.

## Detailed Description of the Preferred Embodiments

As indicated above, the organosilane modified aqueous emulsions of the present invention comprise, in part, aqueous emulsions of air-drying, film-forming vinyl polymers.

As suitable vinyl polymers may be mentioned those based upon a wide variety of free-radically polymerizable monomers, for example, acrylic acid, methacrylic acid and the esters thereof such as methyl (meth)acrylate, ethyl (meth)acrylate, propyl (meth)acrylate, isopropyl (meth)acrylate, butyl (meth)acrylate, 2-ethylhexyl (meth)acrylate, octyl (meth)acrylate, isobornyl (meth)acrylate, dodecyl (meth)acrylate and cyclohexyl (meth)acrylate; maleic acid, maleic anhydride, fumaric acid and the esters and diesters thereof such as dimethyl maleate, dimethyl fumarate, diethyl maleate, diethyl fumarate, dibutyl maleate, dibutyl fumarate, 2-ethyhexyl maleate, 2-ethylhexyl fumarate, octyl maleate, isobornyl maleate, dodecyl maleate and cyclohexyl maleate; (meth)acrylates having ether groups such as 2-methoxyethyl (meth)acrylate, 2-ethoxyethyl (meth)acrylate and 2-methoxypropyl (meth)acrylate; hydroxyalkyl (meth)acrylates such as 2-hydroxyethyl (meth)acrylate, 2-hydroxypropyl (meth)acrylate, 4-hydroxybutyl (meth)acrylate, 6-hydroxyethyl (meth)acrylate, p-hydroxycyclohexyl (meth)acrylate, hydroxypolyetheylene glycol (meth)acrylates, hydroxypolypropylene glycol (meth)acrylates and the corresponding alkoxy derivatives thereof; epoxy (meth)-acrylates such as glycidyl (meth)acrylate; other ethylenically unsaturated monocarboxylic acids such as crotonic acid and itaconic acid; monovinyl aromatic compounds such as styrene, vinyl toluene, $\alpha$-methyl styrene and vinyl naphthalene; other acrylic derivatives such as (meth)acrylamide, (meth)acrylonitrile and N-methylol (meth)acrylamide; N-alkyl (meth)acrylamides such as N-isopropyl (meth)acrylamide, N-t-butyl (meth)acrylamide, N-t-octyl (meth)acrylamide, N,N-dimethyl aminoethyl (meth)acrylate and N,N-diethyl aminoethyl (meth)acrylate; and other well-known vinyl monomers such as vinyl chloride, vinylidene chloride, butadiene, vinyl acetate, vinyl propionate, vinyl pyrrolidone and monomers containing urea and/or urethane groups.

As mentioned above, the vinyl polymers must be film-forming. By "film-forming" is it meant that the vinyl polymers, upon application of the aqueous emulsions (coating compositions) to a substrate, form films thereon. Since the vinyl polymers are air-drying, the films are formed, at least in part, via chemical drying (crosslinking). In addition, the films may also form, in part, as the result of physical drying (solvent evaporation).

As such, the air-drying vinyl polymers contain at least minor amounts of functionality capable of reacting upon application, e.g., via self-crosslinking. As suitable such functionality may be mentioned for example, unsaturated functionality derived from butadiene, vinylidene chloride and other vinylidene monomers; nitrile functionality derived from (meth)acrylonitrile monomers; amide functionality derived from (meth)acrylamide monomers; and epoxy functionality derived from glycidyl (meth)acrylate monomers.

It is especially preferred that the air-drying vinyl polymers contain unsaturated functionality. In addition, the vinyl polymers should possess a number average molecular weight (Mn) in the range of from about 5000 to about $10^6$ and a glass transition temperature in the range of from about -10 °C to about 80 °C.

Aqueous emulsions of these vinyl polymers can be produced via well-known emulsion polymerization techniques, wherein the monomers are dispersed in a continuous phase (aqueous) with the aid of an emulsifier system and polymerized with free-radical initiators. Further details of emulsion polymerization techniques may be had by reference to, for example, F.A. Bovey et al., Emulsion Polymerization, New York; Wiley Interscience, 1955.

Aqueous emulsions can also be produced by emulsifying the vinyl polymers via any well-known procedure and utilizing common emulsifying agents suitable for the particularly chosen system.

The aqueous emulsions suitable for use in the present invention must be stable to both particulate deposition and breakdown of the emulsion, particularly in an alkaline environment. Additionally, the aqueous emulsions should possess a low water vapor transmission.

It has been found that a wide variety of commercially available aqueous emulsions meeting these conditions are suitable for use in the present invention. As specific examples may be mentioned an acrylonitrile modified vinylidene chloride/vinyl chloride/acrylic copolymer commercially available under the

trade designation EP281 from ICI Resins US; a modified styrene butadiene latex resin commercially available under the trade designation RAP213NA from Dow Chemical; and an aqueous acrylic emulsion polymer commercially available under the trade designation Maincote HG-54 from Rohm and Haas.

The aqueous emulsions are modified in accordance with the present invention by the addition of one or more reactive organosilane additives of the general formula (I)

$$R^4 - R^3 - Si \begin{matrix} / R^1{}_n \\ \backslash R^2{}_{3-n} \end{matrix} \qquad (I)$$

wherein

- $R^1$ is selected from an alkoxy or aryloxy group having 1-6 carbon atoms, preferably methoxy or ethoxy, and especially methoxy;
- $R^2$ is a monovalent hydrocarbon radical having 1-6 carbon atoms, and preferably an alkyl or aryl group;
- n is 1, 2 or 3, preferably 2 or 3, and especially 3;
- $R^3$ is a divalent hydrocarbon radical having 1-6 carbon atoms, preferably an alkylene radical having 2-4 and more preferably 3 carbon atoms, and especially a propylene radical; and
- $R^4$ is a reactive group including functionality selected from an ethylenically unsaturated group, a halogen radical, a mercapto group, a cyano group, an amino group or a glycidyl group, and preferably selected from an ethylenically unsaturated group and an amino group.

As specific examples of suitable organosilane additives of the general formula (I) may be mentioned N-(2-aminoethyl)-3-amino-propyl trimethoxysilane, N-(2-aminoethyl)3-aminopropyl triethoxysilane, 4-aminobutyl methyldiethoxysilane, 4-aminobutyl ethyldiethoxysilane, 4-aminobutyl phenyldiethoxysilane, 2-cyanoethyl trimethoxysilane, 3-methacryloxypropyl trimethoxysilane, 3-glycidoxypropyl trimethoxysilane, 3-chloropropyl trimethoxysilane, 2-aminoethyl trimethoxysilane, 2-aminoethyl triethoxysilane, 3-aminopropyl triethoxysilane, 3-aminopropyl methyldiethoxysilane, 3-aminopropyl phenyldiethoxysilane, 3-mercaptopropyl trimethoxysilane, vinyl trimethoxysilane, vinyl triethoxysilane and N-[2-(vinylbenzylamino)ethyl]-3-aminopropyl trimethoxysilane.

Preferred are those organosilane additives of the general formula (I) wherein n is 3, $R^3$ is an alkylene radical having from 2-4 carbon atoms and $R^4$ is a reactive group including functionality selected from an ethylenically unsaturated group or an amino group. Especially preferred are those wherein $R^1$ is a methoxy group and $R^3$ is an alkylene radical having 3 carbon atoms (propylene).

As particularly preferred examples may be mentioned the substituted-propyl trimethoxysilanes mentioned above.

The organosilane additives are preferably added to the aqueous emulsions in amounts ranging from about 2 to about 25 wt%, more preferably from about 2 to about 15 wt%, and especially from about 2,5 to about 7,5 wt%, based upon the vinyl polymer solids. The resulting modified aqueous emulsions should possess an alkaline pH, preferably between about 7 and about 12, and especially between about 7,5 and about 9,8. This may be accomplished, if necessary, by the addition of a base to the aqueous emulsion prior to, upon or subsequent to the addition of the reactive organosilane. As suitable bases may be mentioned, for example, ammonia and tertiary amines.

Prior to use of the modified aqueous emulsions in formulating aqueous coating compositions, it is preferred that they be allowed to stand for a period of time, generally from about 6 to about 24 hours, and especially from about 12 to about 20 hours.

Aqueous coating compositions may be formulated based upon the above modified aqueous emulsions and other additives common to the industry such as, for example, catalysts, curing agents, pigments, coloring agents, pigment dispersing agents, light stabilizers, rheological agents, defoamers and minor amounts (generally less than 10 wt%) of water-miscible and other organic solvents.

The resulting coating compositions may be applied onto any number of well-known substrates by any one of a number of convention application methods. Drying of the coatings may also be conducted under a variety of conditions depending primarily upon the particular vinyl resin utilized. Based upon this and other well-known factors, one skilled in the art can readily choose the desired application and drying conditions.

An especially preferred use of the modified aqueous emulsion in accordance with the present invention

is in the formulation of protective coatings for metal substrates subject to temperatures in excess of about 150 °C such as, for example, the previously mentioned uses. These coatings may be formulated with a variety of additives and via formulating techniques well-known for such uses.

These protective coating compositions may be applied in any well-known manner but preferably by atomized spraying. The so-applied coatings may be dried effectively at room temperature, although elevated temperatures may be utilized for accelerated cure. When utilized as an engine protective coating, dry film thicknesses generally range form about 75 to about 125 µm.

The foregoing more general discussion of the present invention will be further illustrated by the following specific examples.

EXAMPLES

Preparation of Modified Emulsions

Emulsion A

Into a 250 ml beaker were charged 75 parts by weight (pbw) of 3-methoxyacryloxypropyl trimethoxysilane (commercially available under the trade designation Z-6030 from Dow Corning), to which were slowly added, under agitation, 25 pbw of 2-butoxyethanol

Into a separate 500 ml beaker were charged 200 pbw of an acrylonitrile modified vinylidene chloride/vinyl chloride/acrylic co-polymer (commercially available under the trade designation EP281 from ICI Resins US) and 2 pbw of a 29 wt% aqueous ammonia solution. The pH of the solution was 7,5 (as measured with the aid of a Corning pH meter, Model 120).

To this were then added dropwise, over a period of about 30 minutes, 6,67 pbw of the silane/2-butoxyethanol solution. After the addition was complete, the mixture was stirred for an additional five minutes then allowed to stand at room temperature for 18 hours prior to use.

Emulsion B

The procedure for producing Emulsion A was repeated in its entirety except that, as the silane, N-(2-aminoethyl)-3-aminopropyl trimethoxysilane (commercially available under the trade designation Z-6020 from Dow Corning) was utilized in place of the 3-methoxyacryloxypropy trimethoxysilane.

Emulsion C

The procedure for producing Emulsion A was repeated in its entirety except that, as the silane, 3-glycidoxypropyl trimethoxysilane (commercially available under the trade designation Z-6040 from Dow Corning) was utilized in place of the 3-methoxyacryloxypropyl trimethoxysilane.

Emulsion D

The procedure for producing Emulsion A was repeated in its entirety except that, as the silane, N-[2-(vinylbenzylamino)ethyl]-3-aminopropyl trimethoxysilane (commercially available under the trade designation Z-6032 from Dow Corning) was utilized in place of the 3-methoxyacryloxypropyl trimethoxysilane.

Emulsion E

The procedure for producing Emulsion A was repeated in its entirety, except 3,33 pbw of the silane/2-butoxyethanol solution was utilized in place of 6,67 parts.

Emulsion F

The procedure for producing Emulsion A was repeated in its entirety, except 9,99 pbw of the silane/2-butoxyethanol solution was utilized in place of 6,67 parts.

Emulsion G

Into a 250 ml beaker were charged 50 pbw of 3-methoxyacryloxypropyl trimethoxysilane (commercially

available under the trade designation Z-6030 from Dow Corning), to which were slowly added, under agitation, 50 pbw 2-butoxyethanol.

Into a separate 1000 ml beaker were charged 850 pbw of a modified styrene butadiene latex resin (commercially available under the trade designation RAP213NA from Dow Chemical) and 8,5 pbw of a 29 wt% aqueous ammonia solution. The pH of the resulting solution was 9,8 (measured as for Emulsion A).

To this were then added dropwise, with stirring and over a period of about 30 minutes, 40,8 pbw of the silane/2-butoxyethanol solution.

After the addition was complete, the mixture was stirred for an additional 5 minutes then allowed to stand at room temperature for 18 hours prior to use.

Emulsion H

Into a 250 ml beaker were charged 50 pbw of 3-methoxyacryloxypropyl trimethoxysilane (commercially available under the trade designation Z-6030 from Dow Corning), to which were slowly added, under agitation, 50 pbw 2-butoxyethanol.

Into a separate 1000 ml beaker were charged 1100 pbw of an aqueous acrylic emulsion polymer (commercially available under the trade designation Maincote HG-54 from Rohm and Haas). To this were then added dropwise, over a period of about 1 hour, 45,1 pbw of the silane/2-butoxyethanol solution. The pH of the resulting solution was 7,6 (measured as for Emulsion A).

After the addition was complete, the mixture was stirred for an additional 10 minutes then allowed to stand at room temperature for 18 hours prior to use.

Preparation of Mill Base

The following were first mixed for 5 minutes under high speed dispersion:

- 3736,7 pbw of deionized water,
- 179,4 pbw of a dispersant (commercially available under the trade designation BYK 155 from Byk-Mallinckrodt, Wesel, W.Germany),
- 69,8 pbw of a flow additive (commercially available under the trade designation Surfynol 104BC from Air Products and Chemicals, Allentown, PA) and
- 29,9 pbw of a defoamer (commercially available under the trade designation Foamaster H from Henkel Corp., Ambler, PA).

The following were then added in order:

- 1136,0 pbw of a carbon black pigment (32 wt% carbon black, commercially available under the trade designation WD2345 Carbon Black AQ from Daniel Products, Jersey City, NJ),
- 1096,1 pbw of a baryte (commercially available under the trade designation 106 Lomic/Micro MBS-XR from Whittaker, Clark and Daniels, Plainfield, NJ),
- 548,1 pbw of an ion-exchange anti-corrosive pigment (commercially available under the trade designation Shieldex from W.R. Grace, Davison Chemical Division, Baltimore, MD),
- 54,8 pbw of a barium metaborate anti-corrosive pigment (commercially available under the trade designation Butrol 23 from Buckman Laboratories, Memphis, TN),
- 797,2 pbw of a black extender pigment (commercially available under the trade designation X-10 Filler from T.K. Company, Wilmington, MA),
- 49,8 pbw of a dispersant (commercially available under the trade designation Control AMB from Heico, Division of Whittaker, Delaware Water Gap, PA) and
- 1793,6 pbw of flattening agent (commercially available under The trade designation Microtalc MP12-50 from Pfizer Minerals, Pigments and Metals Division, New York, NY).

The above mixture was then loaded into a pebble ball mill and rolled for approximately 48 hours until a grind value of 7+ N.S. (on a Hegman grind gage) was achieved.

Examples 1-7 and Comparative Examples 1-2

Anti-corrosive, air drying coatings were formulated by addition of the components in the order and amounts (pbw) as set forth below in Table I.

TABLE I

| Component | Ex.1 | Ex.2 | Ex.3 | Ex.4 | Ex.5 | Ex.6 | CEx.1 | Ex.7 | CEx.2 |
|---|---|---|---|---|---|---|---|---|---|
| Emulsion A | | 425,0 | | | | | | | |
| B | | 425,0 | | | | | | | |
| C | | | 425,0 | | | | | | |
| D | | | | 425,0 | | | | | |
| E | | | | | 425,0 | | | | |
| F | | | | | | 425,0 | | | |
| $X_1$ | | | | | | | 425,0 | | |
| G | | | | | | | | 425,0 | |
| $X_2$ | | | | | | | | | 425,0 |
| Millbase | 400,0 | 400,0 | 400,0 | 400,0 | 400,0 | 400,0 | 400,0 | 730,6 | 730,6 |
| Aq.Ammonia (29 wt%) | 5,2 | 5,2 | 5,2 | 5,2 | 5,2 | 5,2 | 5,2 | 9,4 | 9,4 |
| Defoamer[1] | 0,73 | 0,73 | 0,73 | 0,73 | 0,73 | 0,73 | 0,73 | 2,6 | 2,6 |
| 2-Butoxy Ethanol | 10,5 | 10,5 | 10,5 | 10,5 | 10,5 | 10,5 | 10,5 | 19,0 | 19,0 |
| Deionized Water | 209,0 | 209,0 | 209,0 | 209,0 | 209,0 | 209,0 | 209,0 | 377,3 | 377,3 |
| Premix of Rheology Control Agent[2] | 20,9 | 20,9 | 20,9 | 20,9 | 20,9 | 20,9 | 20,9 | 37,7 | 37,7 |
| Deionized Water | 20,9 | 20,9 | 20,9 | 20,9 | 20,9 | 20,9 | 20,9 | 37,7 | 37,7 |
| 2-Butoxy Ethanol | 10,9 | 10,9 | 10,9 | 10,9 | 10,9 | 10,9 | 10,9 | 19,7 | 19,7 |

$X_1$ = the acrylonitrile modified vinylidene chloride/vinyl chloride acrylic copolymer utilized in the preparation of Emulsions A-F.

$X_2$ = the modified styrene butadiene latex utilized in the preparation of Emulsion G.

[1] = the same as utilized in the preparation of the millbase.

[2] = an acid-containing, crosslinked emulsion copolymer commercially available under the trade designation Acrysol ASE-60 from Rohm and Haas, Philadelphia, PA.

Prior to application, the viscosity of each of these coatings was adjusted to 15 seconds (as measured at 80°C with the aid of a #3 Zahn cup) by addition of deionized water.

Each coating was spray applied onto cold roll steel (CRS), cast iron (CI), cast aluminum (CA) and electrocoated cold roll steel (E-coat) panels to a dry film thickness of 3,0±0,25 mils. Prior to testing, the coated panels were air dried for 10 days at room (25°C) temperature, yielding smooth, tough films.

The films were tested with respect to the following properties:

(a) Adhesion - tape scribe test;

(b) Humidity resistance - ASTM 02247-87 (168 hours at 100% relative humidity);

(c) Corrosion resistance - ASTM 8117-85 (168 hours in the salt spray cabinet);

(d) Gasoline resistance - complete immersion in Sunoco 92 octane unleaded gasoline for 24 hours at room temperature;

(e) Oil resistance - complete immersion in Penzoil 5W30 oil for 2 hours at 82°C;

(f) Anti-freeze resistance - complete immersion in Peak antifreeze for 2 hours at 82°C; and

(g) Heat resistance - exposure for 2 hours at 147° C.

The results of these tests for each substrate were similar, and are set forth below in Table II.

TABLE II

| Property | Ex.1 | Ex.2 | Ex.3 | Ex.4 | Ex.5 | Ex.6 | CEx.1 | Ex.7 | CEx.2 |
|---|---|---|---|---|---|---|---|---|---|
| Adhesion | Exc | Exc | Exc | Exc | Exc | Exc | Exc | Exc | Exc |
| Humidity Resist. | Exc | Exc | Exc | Good | Good | Good | Fair | Exc | Fair |
| Corros. Resist. | Exc | Exc | Exc | Exc | Exc | Good | Fair | Exc | Poor |
| Gas. Resist. | Exc | Exc | Exc | Exc | Exc | Exc | Exc | Exc | Exc |
| Oil Resist | Exc | Exc | Exc | Exc | Exc | Exc | Exc | Exc | Exc |
| A-F Resist | Good | Good | Good | Good | Good | Good | Good | Good | Good |
| Heat Resist. | Exc | Exc | Exc | Exc | Fair | Exc | Exc | Fair | Fair |

Example 8

An anti-corrosive, air-drying coating was formulated as set forth below.

The following components were ground under high speed dispersion for 15-20 minutes at 3000 rpm:

| | |
|---|---|
| 80,0pbw | of butyl carbitol, |
| 10,0 pbw | of an ester alcohol solvent (commercially available under the trade designation Texanol from Eastman, Kingsport, TN), |
| 85,6 pbw | of deionized water, |
| 29,8 pbw | of a defoamer/dispersant (commercially available under the trade designation Tamol 165 from Rohm and Haas, Philadelphia, PA), |
| 4,0 pbw | of a dispersant (commercially available under the trade designation Triton CF- 10 from Rohm and Haas, Philadelphia, PA), |
| 2,0 pbw | of an anti-float agent [commercially available under the trade designation Triton CF- 10 from Nalco Chemical, Naperville, IL), |
| 110,0 pbw | of red iron oxide pigment and |
| 415,8 pbw | of camel white pigment. |

The resulting mixture was let down by adding the following:

| | |
|---|---|
| 93,6 pbw | of deionized water, |
| 76,0 pbw | of diethylene glycol monobutyl ether, |
| 1055,4 pbw | of Emulsion H, |
| 33,0 pbw | of the above-mentioned solvent, |
| 33,0 pbw | of a plasticizer (commercially available under the trade designation Santicizer 150 from Monsanto, St. Louis, MO), |
| 3,0 pbw | of the above-mentioned anti-float agent, |
| 18.0 pbw | of sodium nitrite and |
| 8,0 pbw | of aqueous ammonia (29 wt%). |

Prior to application, the viscosity of the coating was adjusted to 17 seconds (as measured at 80° C with the aid of a #2 Zahn cup) by addition of deionized water. The resulting coating was spray applied, dried and tested as in Examples 1-7, and displayed excellent adhesion, excellent humidity resistance, excellent corrosion resistance, excellent gasoline resistance, excellent oil resistance, good anti-freeze resistance and excellent heat resistance.

Comparative Example 3

Example 8 was repeated in its entirety except that 1012,1 pbw of the aqueous acrylic emulsion polymer utilized in the preparation of Emulsion H was substituted for the 1055,4 pbw of Emulsion H. The resulting coating was spray applied, dried and tested as in Examples 1-7, and displayed excellent adhesion, good humidity resistance, good corrosion resistance, excellent gasoline resistance, excellent oil resistance, good anti-freeze resistance and fair heat resistance.

Discussion of Results

As can readily be seen from the experimental results, coating compositions based upon the modified emulsions in accordance with the present invention display a particularly improved combination of properties over their unmodified counterparts. This overall improvement is further accomplished without any apparent sacrifice in the already known desirable properties of the unmodified systems.

Only a limited number of preferred embodiments of the present invention have been described and tested above. One skilled in the art, however, will recognize numerous substitutions, modifications and alterations which can be made without departing from the spirit and scope of the invention as limited by the following claims.

## Claims

**1.** An organosilane modified aqueous emulsion of a vinyl polymer, characterized in that it comprises:
(A) an aqueous emulsion of an air-drying, film-forming vinyl polymer, to which has been added
(B) from about 2 to about 25 wt%, based upon the vinyl polymer solids, of one or more reactive organosilane additives of the general formula (I)

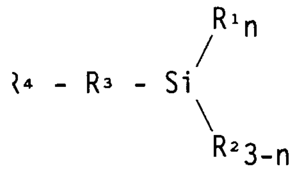

(I)

wherein
- $R^1$ is selected from an alkoxy or aryloxy group having 1-6 carbon atoms,
- $R^2$ is selected from a monovalent hydrocarbon radical having 1-6 carbon atoms,
- n is 1, 2 or 3,
- $R^3$ is a divalent hydrocarbon radical having 1-6 carbon atoms, and
- $R^4$ is a reactive group including functionality selected from an ethylenically unsaturated group, a halogen atom, a cyano group, a mercapto group, an amino group or a glycidyl group,

the organosilane modified aqueous emulsion possessing an alkaline pH.

**2.** The organosilane modified aqueous emulsion of claim 1, wherein the air-drying, film-forming vinyl polymer contains unsaturated functionality.

**3.** The organosilane modified aqueous emulsion of claim 1 wherein the air-drying, film-forming vinyl polymer possesses a number average molecular weight in the range of from about 5000 to about $10^6$, and a glass transition temperature in the range of from about -10 °C to about 80 °C.

**4.** The organosilane modified aqueous emulsion of claim 1, wherein from about 2 to about 15 wt% of the one or more reactive organosilane additives of the general formula (I) has been added.

**5.** The organosilane modified aqueous emulsion of claim 4, wherein from about 2,5 to about 7,5 wt% of the one or more reactive organosilane additives of the general formula (I) has been added.

**6.** The organosilane modified aqueous emulsion of claim 1, wherein $R^1$ is a methoxy or ethoxy group; $R^2$ is an alkyl or aryl group; n is 2 or 3; $R^3$ is an alkylene radical having 2-4 carbon atoms; and $R^4$ is a reactive group including functionality selected from an ethylenically unsaturated group and an amino group.

**7.** The organosilane modified aqueous emulsion of claim 6, wherein $R^1$ is a methoxy group, n is 3 and $R^3$ is an alkylene radical having 3 carbon atoms.

**8.** The organosilane modified aqueous emulsion of claim 1, possessing a pH between about 7 and about 12.

**9.** The organosilane modified aqueous emulsion of claim 8, possessing a pH of from about 7,5 to about 9,8.

**10.** An aqueous coating composition based upon the organosilane modified aqueous emulsion of any one of claims 1-9.

**11.** A method of protecting a metal substrate which is subject to temperatures in excess of 150 °C, comprising the steps of applying onto the substrate an aqueous coating composition based upon the organosilane modified emulsion of any one of claims 1-9 and drying the so-applied coating.

**12.** The method of claim 11, wherein the metal substrate is an engine.

European Patent Office

# EUROPEAN SEARCH REPORT

Application Number

EP 91202174.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE - A - 3 724 824 (HÜTTENES-ALBERTUS CHEMISCHE WERKE GMBH) * Claims 1,5; page 3, lines 36-38; page 4, lines 39-65 * -- | 1,4-10 | C 08 F 8/42<br>C 08 K 5/54<br>C 09 D 5/02 |
| A | EP - A - 0 350 698 (GENERAL ELECTRIC COMPANY) * Claims 1,2,8,18 * -- | 1,6-10 | |
| A | US - A - 4 624 870 (ANTHONY) * Claims 1,2,6,7; column 7, lines 59-62 * ---- | 1,8-11 | |

TECHNICAL FIELDS SEARCHED (Int. Cl.5)

C 08 F 8/00
C 08 K 5/00
C 09 D 5/00
C 09 D 183/00

The present search report has been drawn up for all claims

| Place of search | Date of completion of the search | Examiner |
|---|---|---|
| VIENNA | 02-12-1991 | PUSTERER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)